# EUROPÄISCHE PATENTSCHRIFT

(11) **EP 1 534 497 B1**
(45) Veröffentlichungstag und Bekanntmachung des Hinweises auf die Patenterteilung: **02.05.2007**
(21) Anmeldenummer: 03790787.0
(22) Anmeldetag: 08.07.2003
(51) Int. Cl.: B29D 11/00

(54) **VERFAHREN UND VORRICHTUNG ZUM GIESSEN VON OPTISCHEN LINSEN**
METHOD AND DEVICE FOR MOLDING OPTICAL LENSES
PROCEDE ET DISPOSITIF POUR MOULER DES LENTILLES OPTIQUES

(30) Priorität: 07.08.2002 DE 10236714
(43) Veröffentlichungstag der Anmeldung: 01.06.2005
(73) Patentinhaber: Carl Zeiss Vision GmbH, 73430 Aalen (DE)
(72) Erfinder: VOLKENANDT, Harald, 73932 Aalen (DE)
(74) Vertreter: Witte, Alexander
(86) Internationale Anmeldenummer: PCT/EP2003/007306
(87) Internationale Veröffentlichungsnummer: WO 2004/020181

(56) Entgegenhaltungen:
- WO-A-01/32407
- WO-A-96/19340
- US-A- 5 547 618
- US-A- 5 662 839

## Beschreibung

Die Erfindung betrifft ein Verfahren zum Gießen von optischen Linsen aus einem aushärtbaren Kunststoffmaterial, bei dem zwei Formschalen mit Oberflächen vorbestimmter Form im Abstand voneinander angeordnet und an ihrem Umfang abgedichtet werden, und das Kunststoffmaterial in den von den Oberflächen eingeschlossenen Zwischenraum zwischen den Formschalen eingebracht wird.

Die Erfindung betrifft ferner eine Vorrichtung zum Gießen von optischen Linsen aus einem aushärtbaren Kunststoffmaterial, mit zwei im Abstand voneinander angeordneten Formschalen, deren Oberflächen eine vorbestimmte Form aufweisen, mit einer Abdichtung am Umfang der Formschalen, und mit Mitteln zum Einbringen des Kunststoffmaterials in den von den Oberflächen eingeschlossenen Zwischenraum zwischen den Formschalen.

Ein Verfahren und eine Vorrichtung der vorstehend genannten Art sind bekannt, beispielsweise aus der WO 01/32407 A1.

Für Brillen werden zunehmend Brillengläser aus Kunststoff verwendet. Diese Kunststoff-Brillengläser werden üblicherweise durch Abgießen und anschließendes Aushärten eines entsprechenden Kunststoffmaterials hergestellt. In diesem Zusammenhang ist es bekannt, durch das Abgießen zunächst Halbfabrikate herzustellen, bei denen eine der beiden Linsenoberflächen, üblicherweise die Frontfläche, bereits fertig abgeformt ist. Die andere Fläche, üblicherweise die Rückfläche (auch "Rezeptfläche" genannt), wird dann nach Bedarf in herkömmlicher Schleif- und Poliertechnik kundenspezifisch gefertigt.

Eine herkömmliche Vorrichtung zum Spritzgießen von Kunststoff-Brillengläsern ist in der EP 0 769 999 B1 beschrieben. Bei dieser bekannten Vorrichtung wird ein übliches Spritzgießwerkzeug verwendet. Dieses enthält zur Definition des Formhohlraums zwei Formstücke, deren einander zuweisende Oberflächen den Oberflächen des herzustellenden Brillenglases entsprechen.

Bei dieser bekannten Vorrichtung ist eine individuelle Einstellung dadurch möglich, daß eines der beiden Formstücke über eine Keilverstellung in Richtung der optischen Achse der Linse relativ zum anderen Formstück verstellt werden kann. Auf diese Weise können Linsen unterschiedlicher Dicke hergestellt werden.

Aus der eingangs genannten WO 01/32407 A1 ist, ebenso wie aus der US 5,547,618 und der US 5,662,839 bekannt, statt der oben erwähnten Halbfabrikate bereits komplett fertige Brillengläser durch Abgießen von Kunststoff herzustellen. Dies wird dadurch erreicht, daß als Gießform eine Anordnung mit zwei im Abstand voneinander angeordneten Formschalen verwendet wird, die je nach herzustellendem Brillenglas individuell aus einem entsprechenden Vorrat derartiger Formschalen entnommen werden. Da es auf diese Weise also möglich ist, beide Oberflächen des Brillenglases kundenspezifisch zu gießen, ist eine Nachbearbeitung der Rezeptfläche nicht mehr erforderlich.

Wie bereits erwähnt wurde, hat diese bekannte Vorgehensweise jedoch den Nachteil, daß bei jeder derartigen Vorrichtung ein entsprechendes großes Lager mit Formschalen sowohl für die Frontfläche wie auch für die Rückfläche vorgehalten werden muß. Aus ökonomischen Gründen ist dabei die Anzahl der im Lager enthaltenen Formschalen begrenzt, so daß nur eine begrenzte Anzahl unterschiedlicher Brillengläser hergestellt werden kann. Kompliziert oder sehr individuell geformte Brillengläser, die in der Praxis nur selten verlangt werden, sind daher auf diese Weise nicht herstellbar, weil das Formschalenlager nur die gängigen Brillenglasformen wiedergeben kann.

Das Formschalenlager stellt darüber hinaus einen erheblichen Kostenfaktor dar, weil erhebliche Investitionsmittel dadurch gebunden werden.

Weiterhin hat sich in der Praxis gezeigt, daß bei dieser bekannten Vorgehensweise mit zwei Formschalen ein wesentliches Problem im Schrumpfen des Kunststoffmaterials liegt. Diese Schrumpfvorgänge sind nach heutigem Kenntnisstand nur schwer, wenn überhaupt beherrschbar, so daß nicht selten zur Herstellung eines bestimmten Brillenglases mehrere Brillengläser in iterativer Weise nacheinander hergestellt werden müssen, ehe schlußendlich ein ausgehärtetes Kunststoff-Brillenglas mit den gewünschten optischen Eigenschaften zur Verfügung steht.

Ein weiterer Nachteil der bekannten Vorgehensweise besteht darin, daß neue Konzepte von Brillenglasflächen, insbesondere bei Gleitsichtgläsern, nur mit einer erheblichen Reaktionszeit und entsprechenden Kosten umgesetzt werden können, weil zu diesem Zweck der gesamte Vorrat an Formschalen ausgetauscht werden müßte.

Der Erfindung liegt daher die Aufgabe zugrunde, ein Verfahren und eine Vorrichtung der eingangs genannten Art dahingehend weiterzubilden, daß die vorstehend genannten Nachteile vermieden werden. Insbesondere sollen die Nachteile einer großen Lagerhaltung von Formschalen vermieden werden und es soll möglich sein, sehr spezielle Linsen bzw. Brillengläser nach Kundenwunsch herzustellen und vorhandene Konzepte für Brillenglasflächen kurzfristig und ohne erhebliche Aufwendungen an moderne Entwicklungen anpassen zu können.

Bei einem Verfahren der eingangs genannten Art wird diese Aufgabe erfindungsgemäß dadurch gelöst, daß, entsprechend Anspruch 1, mindestens eine der Oberflächen in Abhängigkeit von vorgegebenen Daten unmittelbar vor dem Einbringen des Kunststoffmaterials aus einer Ausgangsform in die vorbestimmte Form umgeformt wird.

Bei einer Vorrichtung der eingangs genannten Art wird die Aufgabe erfindungsgemäß dadurch gelöst, daß, entsprechend Anspruch 11, Mittel zum Umformen mindestens einer der Oberflächen aus einer Ausgangsform in die vorbestimmte Form in Abhängigkeit von vorgegebenen Daten, unmittelbar vor dem Einbringen des Kunststoffmaterials, vorgesehen sind.

Die der Erfindung zugrunde liegende Aufgabe wird auf diese Weise vollkommen gelöst.

Erfindungsgemäß wird nämlich nur noch ein Paar von Formschalen benötigt, das zum Abgießen von Linsen bzw. Brillengläsern jedweder Formgebung eingesetzt wird. Dies wird erfindungsgemäß dadurch ermöglicht, daß die individuelle Form der Formschalen erst im Werkzeug selbst eingestellt wird, die Formschalen also typischerweise im Werkzeug verbleiben und nach kundenspezifischer Vorgabe für jeden einzelnen Abgießvorgang neu in ihrer Form eingestellt werden.

Es entfallen damit die Kosten der Lagerhaltung für einen Park von Formschalen, weil durch Vorgabe der entsprechenden Daten der Hohlraum zum Abgießen der individuellen Linse immer mit demselben Paar von Formschalen definiert wird. Somit kann auch durch einfaches Updaten der Software ein Übergang auf neuartige Brillenflächenkonzepte bewirkt werden, ohne daß Hardware ausgetauscht werden muß.

Der Fertigungsvorgang selbst wird auf diese Weise auch beschleunigt, weil im Vergleich zum herkömmlichen mechanischen Austausch von Formschalen lediglich eine Veränderung der Form der beiden Formschalen bewirkt werden muß, was in wesentlich kürzerer Zeit ermöglicht werden kann.

Da die beiden Formschalen (selbstverständlich innerhalb gewisser technisch bedingter Grenzen) nahezu beliebig dreidimensional verformt werden können, können gleichfalls beliebig geformte Linsen hergestellt werden, wenn die entsprechenden Datensätze (Spline-Flächen) einem Prozeßrechner zum Steuern der erfindungsgemäßen Vorrichtung zugeführt werden. Somit sind die Einschränkungen des Lieferbereiches oder des Produktbereiches, wie sie für gattungsgemäße Verfahren und Vorrichtungen typisch waren, beim erfindungsgemäßen Vorgehen nicht mehr gegeben.

Für die Realisierung der individuell einstellbaren Verformung der Formschalen kann dabei auf Techniken zurückgegriffen werden, wie sie unter dem Schlagwort "Adaptive Optik" aus der Technik astronomischer Teleskope bekannt sind.

So sind z.B. in der DE 199 17 519 C2 sowie der US 4,280,756 unterschiedliche Konzepte für derartige große Spiegel beschrieben, die in "adaptiver Optik" ausgeführt werden.

Diese bekannten Konzepte beziehen sich, wie bereits erwähnt, auf Großspiegel mit teilweise mehreren Metern Durchmesser, bei denen Gewichtsprobleme eine besondere Rolle spielen. Um diese Großspiegel z.B. für astronomische Zwecke, für das Sammeln von Sonnenlicht für Sonnenkraftwerke und dgl. verstellen zu können, ist es auf diese Weise bekannt, z.B. den Brennpunkt oder die Ausrichtung der optischen Achse von Hohlspiegeln zu verändern, indem die spiegelnde Oberfläche dünn ausgebildet und mit einer Vielzahl von Aktuatoren versehen wird, um die Formgebung dieses sehr großen Spiegels dem jeweiligen Einsatzfall anzupassen.

Ein besonderes Verdienst der vorliegenden Erfindung besteht somit darin, dieses von Großspiegeln an sich bekannte Konzept nunmehr auf die Fertigung von Kunststofflinsen übertragen zu haben, was für den Fachmann durchaus nicht nahelag, da die zugrunde liegenden Probleme völlig andersartig waren und es sich um Anwendungsbereiche handelt, bei denen sich die Abmessungen um mehrere Größenordnungen unterscheiden.

Bei bevorzugten Ausführungsformen der Erfindung wird die zu verformende Oberfläche mechanisch umgeformt, insbesondere mittels einer Vielzahl von mechanisch betätigten Stellelementen, beispielsweise Feingewindestangen, fluidisch betätigten Aktuatoren usw.

Alternativ können aber auch elektrisch ansteuerbare Mittel vorgesehen werden, die auf piezoelektrischen oder magnetostriktiven Effekten beruhen.

Eine besonders gute Wirkung wird im Rahmen der vorliegenden Erfindung dadurch erzielt, daß die Verformung der Oberfläche erfaßt und die Oberfläche in einem geschlossenen Regelkreis umgeformt wird.

Diese Maßnahme hat den Vorteil, daß eine besondere Präzision bei der Herstellung der Linsen erzielt wird, da die tatsächlich hergestellte Oberfläche im Randbereich des Formhohlraums nicht nur in Abhängigkeit vorgegebener Daten eingestellt, sondern die Einstellung auch über eine Regelschleife überwacht und ggf. nachgestellt wird. In diesem Zusammenhang ist auch daran zu denken, über den Regelkreis Formänderungen auszugleichen, die sich während des Spritzvorganges durch Ausdehnung oder Schrumpfen ergeben könnten.

Da die aktuelle Form der verformten Oberfläche selbst im allgemeinen nur mit Schwierigkeiten erfaßt werden kann, sieht eine weiter bevorzugte Variante dieses Ausführungsbeispiels vor, die Verformung der Oberfläche der Formschale mittelbar zu erfassen, indem zugleich mit der Oberfläche eine Referenzoberfläche verformt und deren Verformung erfaßt wird.

Diese Maßnahme hat den Vorteil, daß der Meßvorgang von der eigentlichen formgebenden Formschale abgekoppelt wird, so daß der Aufbau der erfindungsgemäßen Vorrichtung und die Durchführung des erfindungsgemäßen Verfahrens damit insgesamt erleichtert werden.

Obwohl man daran denken könnte, die Referenzoberfläche in einem anderen Maßstab zu verformen als die Oberfläche des Formhohlraums selbst, um anschließend die Maßstabsunterschiede rechnerisch auszugleichen, ist doch eine Ausführungsform bevorzugt, bei der die Oberfläche und die Referenzoberfläche in gleicher Weise verformt werden.

Um die Verformung der Oberfläche bzw. der Referenzoberfläche zu erfassen, sind unterschiedliche Meßverfahren bekannter Art einsetzbar. Im Rahmen der vorliegenden Erfindung ist besonders bevorzugt, einen Wellenfrontsensor einzusetzen, wie er beispielsweise aus der DE 100 14 334 C2 bekannt ist, auf die für weitere Einzelheiten verwiesen werden darf.

Im Rahmen der vorliegenden Erfindung ist es möglich, eine der Formschalen starr und nur die andere Formschale vorzugsweise elastisch verformbar auszubilden, wodurch an das herkömmliche Konzept der eingangs erwähnten Halbfabrikate angeknüpft wird.

Besonders bevorzugt ist jedoch im Rahmen der vorliegenden Erfindung, wenn die Oberflächen beider Formschalen verformt werden.

Um dies zu bewerkstelligen, ist eine Vorrichtung besonders bevorzugt, bei der zu beiden Seiten der Formschalen in Richtung der optischen Achse der Linse jeweils ein Mikromanipulator zum Verformen der Formschalen angeordnet ist, wobei jedenfalls auf der den Formschalen abgewandten Seite der Mikromanipulatoren Referenzschalen angeordnet sind, wobei ferner die Mikromanipulatoren jeweils die ihnen zugeordnete Formschale und Referenzschale in Abhängigkeit von Steuersignalen einer Steuereinrichtung verformen, und schließlich auf den von den Mikromanipulatoren abgewandten Seiten der Referenzschalen Wellenfrontsensoren angeordnet sind, die mit der Steuereinrichtung in Verbindung stehen.

Mit einer derartigen Vorrichtung können alle oben genannten Vorteile erreicht werden, indem eine maximale Flexibilität bei der Linsenformgebung in kürzestmöglicher Zeit der Herstellung bei optimaler Präzision der Formgebung erreicht werden kann.

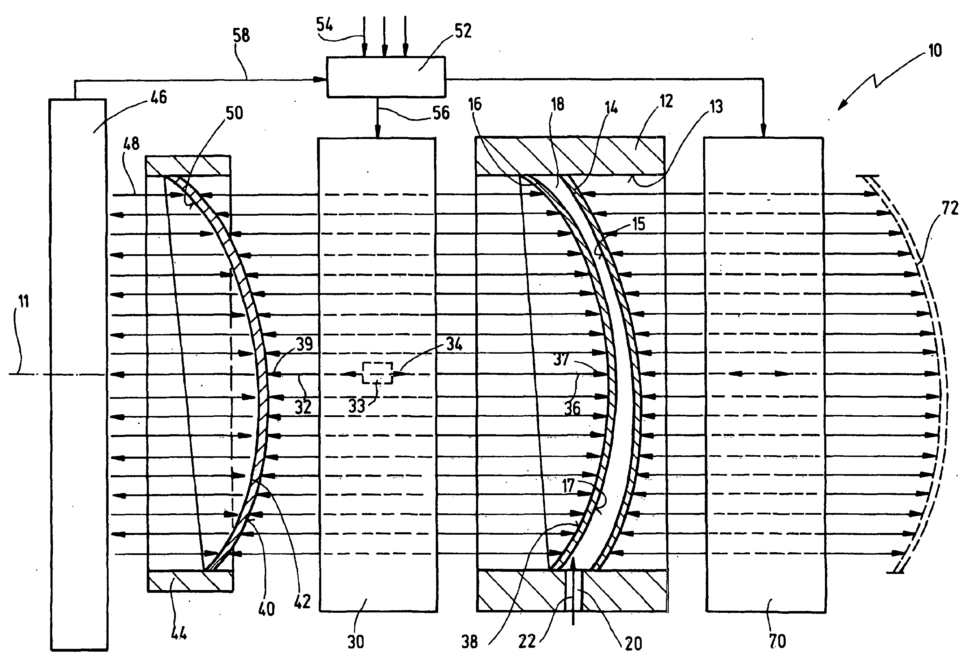

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert.

Die einzige Figur zeigt eine äußerst schematisierte Seitenansicht, teilweise im Schnitt, durch ein Ausführungsbeispiel einer erfindungsgemäßen Vorrichtung, wie sie zur Durchführung des erfindungsgemäßen Verfahrens verwendet werden kann.

In der Figur bezeichnet 10 insgesamt eine Vorrichtung zum Gießen von optischen Linsen, insbesondere von Brillengläsern aus Kunststoff.

Die Vorrichtung 10 ist entlang einer Achse 11 angeordnet, die zugleich die optische Achse der zu gießenden Linse bildet.

Ein rohrförmiges Gebilde 12 nimmt an seiner Innenoberfläche 13 eine vordere Formschale 14 sowie eine hintere Formschale 16 auf. Die Formschalen 14, 16 sind im axialen Abstand zueinander angeordnet. Der zwischen ihnen liegende Zwischenraum 18 wird durch eine konvexe Oberfläche 15 der vorderen Formschale 14 sowie eine konkave Oberfläche 17 der hinteren Formschale 16 definiert. Die Oberflächen 15 und 17 sind im dargestellten Ausführungsbeispiel die optisch bestimmenden Oberflächen der herzustellenden Linse.

Dem Zwischenraum 18 kann über eine Öffnung 20 flüssiger Kunststoff zugeleitet werden, wie mit einem Pfeil 22 angedeutet.

Das Abgießen der Linsen an sich ist bekannt und nicht Gegenstand der vorliegenden Erfindung.

Im dargestellten Ausführungsbeispiel sind beide Formschalen 14 und 16 verformbar, insbesondere elastisch verformbar ausgebildet. Alternativ ist jedoch auch möglich, nur eine der Formschalen verformbar, die andere hingegen starr auszubilden.

Weitere Einzelheiten der Erfindung sollen nun anhand der hinteren Formschale 16 erläutert werden:

In axialer Richtung neben dem rohrförmigen Gebilde 12 befindet sich ein mit 30 angedeuteter Mikromanipulator. Der Mikromanipulator 30 weist eine Vielzahl von Stellelementen 32 auf, die über Stellantriebe 33 in axialer Richtung verfahrbar sind, wie mit einem Doppelpfeil 34 angedeutet.

Die Stellelemente 32 können z.B. Feingewindestangen sein, es sind jedoch auch pneumatisch, piezoelektrisch, magnetostriktiv oder sonstwie bewegte Aktuatoren als Stellelement 32 einsetzbar.

Wichtig bei dem in der Figur dargestellten Ausführungsbeispiel ist, daß die Stellelemente 32 zu beiden Seiten des Mikromanipulators 30 überstehen und wie eine durchgehende Stange wirken. Dies bedeutet, daß beim Verschieben eines Stellelementes 32 z.B. in der Figur nach rechts sich der links aus dem Mikromanipulator 30 vorstehende Abschnitt des Stellelementes 32 verkürzt und der rechts aus dem Mikromanipulator 30 vorstehende Abschnitt verlängert.

Die Figur zeigt eine Seitenansicht des Mikromanipulators 30. Es versteht sich, daß die Stellelemente 32 in einer um 90° gedrehten Ansicht über die gesamte Fläche der hinteren Formschale 16, also über eine mindestens näherungsweise kreisförmige Fläche verteilt angeordnet sind.

Die Stellelemente 32 liegen in einem rechten Ende 36 in einem Anlage- bzw. Befestigungspunkt 37 an einer hinteren, konkaven Oberfläche 38 der hinteren Formschale 16 an.

Das gegenüberliegende, in die Figur linke Ende der Stellelemente 32 liegt hingegen an einem Anlage- bzw. Befestigungspunkt 39 einer konvexen Oberfläche 40 einer Referenzschale 42 an.

Wenn insoweit von Anlage- bzw. Befestigungspunkten 37, 39 die Rede ist, so kann hierunter sowohl eine punktförmige Berührung wie auch eine Befestigung verstanden werden, je nachdem, ob nur Druck- oder auch Zugkräfte von den Stellelementen 32 auf die Formschalen 16, 42 übertragen werden sollen.

Die Referenzschale 42 ist in dem dargestellten Ausführungsbeispiel ähnlich wie die hintere Formschale 16 ausgebildet und in einer ringförmigen Halterung 44 gelagert.

Auf der vom Mikromanipulator 30 abgewandten Seite der Referenzschale 42 befindet sich ein flächiger wellenfrontsensor 46, von dem Lichtstrahlen 48 auf eine konkave, hintere Oberfläche 50 der Referenzschale 42 ausgestrahlt und dann wieder von dieser reflektiert werden. Der Wellenfrontsensor 46 kann z.B. gemäß der DE 100 14 334 C2 ausgebildet sein. Seine Einzelheiten sind nicht Bestandteil der vorliegenden Erfindung.

Die gesamte Vorrichtung 10 wird mittels eines Steuergerätes 52 gesteuert. Das Steuergerät 52 empfängt über Eingänge 54 Signale, insbesondere Spline-Funktionen gewünschter Oberflächen für die herzustellende Linse.

Das Steuergerät 52 ist über eine Steuerleitung 56 mit dem Mikromanipulator 30 verbunden und empfängt Meßsignale vom Wellenfrontsensor 46 über eine Steuerleitung 58.

In der Figur ist ferner dargestellt, daß auch die vordere Formschale 14 in der bereits beschriebenen Weise ausgebildet und angeordnet sein kann. Bei diesen Ausführungsbeispielen ist dann in entsprechender Weise ein weiterer Mikromanipulator 70 sowie eine weitere Referenzschale 72 vorgesehen. Über deren Anordnung und Funktion darf auf die vorstehende und die nachfolgende Beschreibung verwiesen werden.

Die Wirkungsweise der Vorrichtung 10 ist wie folgt:

Wenn ein bestimmtes Brillenglas hergestellt werden soll, werden die Daten von dessen Oberfläche bzw. Oberflächen als Spline-Funktionen aus einem Speicher oder sonstwie dem Steuergerät 52 zugeleitet. Das Steuergerät 52 aktiviert über die Steuerleitung 56 den Mikromanipulator 30. In diesem werden mittels der bereits erwähnten Stellantriebe 33 die Stellelemente 32 in axialer Richtung in Abhängigkeit von den eingelesenen Daten verschoben. Da sich die Abschnitte der Stellelemente 32 auf den beiden Seiten des Mikromanipulators 30 gegenläufig in ihrer Länge verändern, wird an der konvexen Oberfläche 40 der Referenzschale 42 ein getreues Abbild der konkaven Oberfläche 38 an der Rückseite der hinteren Formschale 16 erzeugt. Bei konstanter axialer Dicke der Referenzschale 42 entspricht daher die Form der konkaven Oberfläche 50 auf der Rückseite der Referenzschale 42 der Form der konkaven Oberfläche 38 an der Rückseite der hinteren Formschale 16.

Mittels des Wellenfrontsensors 46 wird nun überprüft, ob die räumliche Form der konkaven Oberfläche 50 den vorgegebenen Daten entspricht. Wenn dies an einzelnen Punkten der Oberfläche 50 nicht der Fall ist, wird das entsprechende Stellelement 32 über das Steuergerät 52 entsprechend nachgestellt, bis innerhalb des geschlossenen Regelkreises 52-30-42-46 der Restfehler gleich Null oder gleich einer vorgegebenen Minimalgröße ist.

Wenn die vordere Formscheibe 14 starr ausgebildet ist, kann nun mit dem Abgießen der Linse begonnen werden. Anderenfalls muß auch die vordere Formscheibe 14 in entsprechender Weise mittels des Mikromanipulators 70 in die vorgewählte Form gebracht werden.

Sobald der durch den Zwischenraum 18 gebildete Formhohlraum der Vorrichtung 10 auf diese Weise eingestellt ist, kann mit dem Einspritzen des flüssigen Kunststoffes durch die Öffnung 20 begonnen werden.

Sobald der Zwischenraum 18 mit flüssigem Kunststoff befüllt ist, kann mit dessen Aushärtung begonnen werden. Diese kann in an sich bekannter Weise durch Einstrahlen von UV-Licht oder durch Wärmeeinwirkung beschleunigt werden. Dies ist ebensowenig Bestandteil der vorliegenden Erfindung wie das Einsetzen und Herausnehmen der Formschale oder Formschalen aus dem rohrförmigen Gebilde 12. Es versteht sich, daß das rohrförmige Gebilde 12 insoweit auch nur beispielhaft zu verstehen ist und daß auch andere Abdichtmöglichkeiten verwendet werden können, um einen geschlossenen Formhohlraum zu erzeugen. Entsprechende Beispiele sind in der eingangs erwähnten WO 01/32407 A1 beschrieben.

Die Formschalen 14, 16 sowie die Referenzschalen 42, 72 müssen, soweit sie verformbar ausgebildet sind, in gewissen technischen Grenzen beweglich sein. Zu diesem Zweck können sie aus Glas oder aus Metall geringer Dicke ausgebildet werden.

## Patentansprüche

1. Verfahren zum Gießen von optischen Linsen aus einem aushärtbaren Kunststoffmaterial, bei dem zwei Formschalen (14, 16) mit Oberflächen (15, 17) vorbestimmter Form im Abstand voneinander angeordnet und an ihrem Umfang abgedichtet werden, und das Kunststoffmaterial in den von den Oberflächen (15, 17) eingeschlossenen Zwischenraum (18) zwischen den Formschalen (14, 16) eingebracht wird, **dadurch gekennzeichnet, daß** mindestens eine der Oberflächen (15, 17) in Abhängigkeit von vorgegebenen Daten unmittelbar vor dem Einbringen des Kunststoffmaterials aus einer Ausgangsform in die vorbestimmte Form umgeformt wird.

2. Verfahren nach Anspruch 1, **dadurch gekennzeichnet, daß** die Oberfläche (15, 17) mechanisch umgeformt wird.

3. Verfahren nach Anspruch 2, **dadurch gekennzeichnet, daß** die Oberfläche (15, 17) mittels einer Vielzahl von mechanisch betätigten Stellelementen (32) umgeformt wird.

4. Verfahren nach Anspruch 1, **dadurch gekennzeichnet, daß** die Oberfläche (15, 17) piezoelektrisch umgeformt wird.

5. Verfahren nach Anspruch 1, **dadurch gekennzeichnet, daß** die Oberfläche (15, 17) magnetostriktiv umgeformt wird.

6. Verfahren nach einem oder mehreren der Ansprüche 1 bis 5, **dadurch gekennzeichnet, daß** die Verformung der Oberfläche (15, 17) erfaßt und die Oberfläche (15, 17) in einem geschlossenen Regelkreis umgeformt wird.

7. Verfahren nach Anspruch 6, **dadurch gekennzeichnet, daß** die Verformung der Oberfläche (15, 17) der Formschale (14, 16) mittelbar erfaßt wird, indem zugleich mit der Oberfläche (15, 17) eine Referenzoberfläche (40) verformt und deren Verformung erfaßt wird.

8. Verfahren nach Anspruch 7, **dadurch gekennzeichnet, daß** die Oberfläche (15, 17) und der Referenzoberfläche (40) in gleicher Weise verformt werden.

9. Verfahren nach einem oder mehreren der Ansprüche 6 bis 8, **dadurch gekennzeichnet, daß** die Verformung mittels eines Wellenfrontsensors (46) erfaßt wird.

10. Verfahren nach einem oder mehreren der Ansprüche 1 bis 9, **dadurch gekennzeichnet, daß** die Oberflächen (15, 17) beider Formschalen (14, 16) verformt werden.

11. Vorrichtung zum Gießen von optischen Linsen aus einem aushärtbaren Kunststoffmaterial, mit zwei im Abstand voneinander angeordneten Formschalen (14, 16), deren Oberflächen (15, 17) eine vorbestimmte Form aufweisen, mit einer Abdichtung (12) am Umfang der Formschalen (14, 16), und mit Mitteln (20, 22) zum Einbringen des Kunststoffmaterials in den von den Oberflächen (15, 17) eingeschlossenen Zwischenraum (18) zwischen den Formschalen (14, 16), **dadurch gekennzeichnet, daß** Mittel zum Umformen mindestens einer der Oberflächen (15, 17) aus einer Ausgangsform in die vorbestimmte Form in Abhängigkeit von vorgegebenen Daten, unmittelbar vor dem Einbringen des Kunststoffmaterials, vorgesehen sind.

12. Vorrichtung nach Anspruch 11, **dadurch gekennzeichnet, daß** die Mittel mechanisch ausgebildet sind.

13. Vorrichtung nach Anspruch 12, **dadurch gekennzeichnet, daß** die Mittel eine Vielzahl von mechanisch betätigten Stellelementen (32) umfassen.

14. Vorrichtung nach Anspruch 13, **dadurch gekennzeichnet, daß** die Stellelemente (32) Teil eines Mikromanipulators (30, 70) sind.

15. Vorrichtung nach Anspruch 13 oder 14, **dadurch gekennzeichnet, daß** die Stellelemente sich im wesentlichen parallel zur optischen Achse (11) der Linse erstrecken.

16. Vorrichtung nach Anspruch 11, **dadurch gekennzeichnet, daß** die Mittel piezoelektrisch ausgebildet sind.

17. Vorrichtung nach Anspruch 11, **dadurch gekennzeichnet, daß** die Mittel magnetostriktiv ausgebildet sind.

18. Vorrichtung nach einem oder mehreren der Ansprüche 11 bis 17, **dadurch gekennzeichnet, daß** Mittel zum Erfassen der Verformung der Oberfläche (15, 17) und ein geschlossener Regelkreis zum Umformen der Oberfläche (15, 17) vorgesehen sind.

19. Vorrichtung nach Anspruch 18, **dadurch gekennzeichnet, daß** eine Referenzoberfläche (40) vorgesehen ist, daß die Mittel zum Verformen der Oberfläche (15, 17) der Formschale (14, 16) zugleich eine Verformung der Referenzoberfläche (40) bewirken, und daß die Mittel zum Erfassen der Verformung mit der Referenzfläche (40) zusammenwirken.

20. Vorrichtung nach Anspruch 18 oder 19, **dadurch gekennzeichnet, daß** die Mittel zum Erfassen der Verformung als Wellenfrontsensor (46) ausgebildet sind.

21. Vorrichtung nach einem oder mehreren der Ansprüche 11 bis 20, **dadurch gekennzeichnet, daß** die Formschalen (14, 16) aus dünnem Glas ausgebildet sind.

22. Vorrichtung nach einem oder mehreren der Ansprüche 11 bis 20, **dadurch gekennzeichnet, daß** die Formschalen (14, 16) aus dünnem Metall ausgebildet sind.

23. Vorrichtung nach einem oder mehreren der Ansprüche 19 bis 22, **dadurch gekennzeichnet, daß** die Referenzoberfläche (40) auf einer Referenzschale (42, 72) angeordnet und die Referenzschale aus dünnem Glas ausgebildet ist.

24. Vorrichtung nach einem oder mehreren der Ansprüche 19 bis 22, **dadurch gekennzeichnet, daß** die Referenzoberfläche (40) auf einer Referenzschale (42, 72) angeordnet und die Referenzschale aus dünnem Metall ausgebildet ist.

25. Vorrichtung nach einem oder mehreren der Ansprüche 11 bis 24, **dadurch gekennzeichnet, daß** zu beiden Seiten der Formschalen (14, 16) in Richtung der optischen Achse (11) der Linse jeweils ein Mikromanipulator (30, 70) zum Verformen der Formschalen (14, 16) angeordnet ist, daß jeweils auf der den Formschalen (14, 16) abgewandten Seite der Mikromanipulatoren (30, 70) Referenzschalen (42, 72) angeordnet sind, daß die Mikromanipulatoren (30, 70) jeweils die ihnen zugeordnete Formschale (14, 16) und Referenzschale (42, 47) in Abhängigkeit von Steuersignalen einer Steuereinrichtung (52) verformen, und daß auf den von den Mikromanipulatoren (30, 70) abgewandten Seiten der Referenzschalen (42, 47) Wellenfrontsensoren (46) angeordnet sind, die mit der Steuereinrichtung (52) in Verbindung stehen.

26. Vorrichtung nach einem oder mehreren der Ansprüche 11 bis 24, **dadurch gekennzeichnet, daß** eine erste, verformbare Formschale und eine zweite, starre Formschale vorgesehen sind, daß zu einer Seite der ersten Formschale in Richtung der optischen Achse der Linse ein Mikromanipulator zum Verformen der ersten Formschale angeordnet ist, daß auf der der ersten Formschale abgewandten Seite des Mikromanipulators eine Referenzschale angeordnet ist, daß der Mikromanipulator die erste Formschale und die Referenzschale in Abhängigkeit von Steuersignalen einer Steuereinrichtung verformt, und daß auf der dem Mikromanipulator abgewandten Seiten der Referenzschale ein wellenfrontsensor angeordnet ist, der mit der Steuereinrichtung in Verbindung steht.

## Claims

1. A process for molding optical lenses from a thermosettable plastic material, wherein two molding shells (14, 16) having surfaces (15, 17) of a predetermined shape are arranged at a distance relative to one another and are sealed at their periphery, the plastic material being brought into the gap (18) enclosed by the surfaces (15, 17) between the molding shells (14, 16), **characterized in that** at least one of the surfaces (15, 17) is deformed from an initial shape into the predetermined shape immediately prior to the bringing in of the plastic material and as a function of predetermined data.

2. The process of claim 1, **characterized in that** the surface (15, 17) is mechanically deformed.

3. The process of claim 2, **characterized in that** the surface (15, 17) is deformed by means of a plurality of mechanically operated positioning elements (32).

4. The process of claim 1, **characterized in that** the surface (15, 17) is deformed piezoelectrically.

5. The process of claim 1, **characterized in that** the surface (15, 17) is deformed magnetostrictively.

6. The process of any of claims 1 through 5, **characterized in that** the deformation of the surface (15, 17) is sensed and the surface (15, 17) is deformed in a closed loop control circuit.

7. The process of claim 6, **characterized in that** the deformation of the surface (15, 17) of the molding shell (14, 16) is sensed indirectly by simultaneously deforming the surface (15, 17) and a reference surface (40) and by sensing the deformation of the latter.

8. The process of claim 7, **characterized in that** the surface (15, 17) and the reference surface (40) are deformed in the same manner.

9. The process of one or more of claims 6 through 8, **characterized in that** the deformation is sensed by means of a wave front sensor (46).

10. The process of one or more of claims 1 through 9, **characterized in that** the surfaces (15, 17) of both molding shells (14, 16) are deformed.

11. An apparatus for molding optical lenses from a thermosettable plastic material, comprising two molding shells (14, 16) arranged at a distance relative to one another, the molding shells (14, 16) having surfaces (15, 17) of a predetermined shape, and a sealing (12) at the periphery of the molding shells (14, 16), and means (20, 22) for bringing the plastic material into the gap (18) enclosed by the surfaces (15, 17) between the molding shells (14, 16), **characterized in that** means are provided for deforming at least one of the surfaces (15, 17) from an initial shape into the predetermined shape immediately prior to the bringing in of the plastic material as a function of predetermined data.

12. The apparatus of claim 11, **characterized in that** the deforming means are configured mechanically.

13. The apparatus of claim 12, **characterized in that** the deforming means comprise a plurality of mechanically operated positioning elements (32).

14. The apparatus of claim 13, **characterized in that** the positioning elements (32) are part of a micro manipulator (30, 70).

15. The apparatus of claim 13 or 14, **characterized in that** the positioning elements extend essentially parallel to the optical axis (11) of the lens.

16. The apparatus of claim 11, **characterized in that** the deforming means are configured piezoelectrically.

17. The apparatus of claim 11, **characterized in that** the deforming means are configured magnetorestrictively.

18. The apparatus of one or more of claims 11 through 17, **characterized in that** means are provided for sensing the deformation of the surface (15, 17), and a closed loop control circuit for deforming the surface (15, 17).

19. The apparatus of claim 18, **characterized in that** a reference surface (40) is provided, that the means for deforming the surface (15, 17) of the molding shell (14, 16) simultaneously effect a deformation of the reference surface (40), and that the means for sensing the deformation coact with the reference surface (40).

20. The apparatus of claim 18 or 19, **characterized in that** the deformation sensing means are configured as a wave front sensor.

21. The apparatus of one or more of claims 11 through 20, **characterized in that** the molding shells (14, 16) are made from thin glass.

22. The apparatus of one or more of claims 11 through 20, **characterized in that** the molding shells (14, 16) are made from thin metal.

23. The apparatus of one or more of claims 19 through 22, **characterized in that** the reference surface (40) is located on a reference shell (42, 72) and that the reference shell is made from thin glass.

24. The apparatus of one or more of claims 19 through 22, **characterized in that** the reference surface (40) is located on a reference shell (42, 72) and that the reference shell is made from thin metal.

25. The apparatus of one or more of claims 11 through 24, **characterized in that** one micro manipulator (30, 70) each for deforming the molding shells (14, 16) is arranged on opposite sides of the molding shells (14, 16), as viewed along the optical axis (11) of the lens, that reference shells (42, 72) are arranged on the sides of the micro manipulators (30, 70) opposite the molding shells (14, 16), that the micro manipulators (30, 70) each deform their associated molding shell (14, 16) and reference shell (42, 72) as a function of control signals from a control unit (52), and that wave front sensors (46) are arranged on the sides of the reference shells (42, 72) opposite the micro manipulators (30, 70) and are connected to the control unit (52).

26. The apparatus of one or more of claims 11 through 24, **characterized in that** a first, deformable molding shell and a second, rigid molding shell are provided, that a micro manipulator for deforming the first molding shell is arranged on one side of the first molding shell, as viewed along the optical axis of the lens, that a reference shell is arranged on the side of the micro manipulator opposite the first molding shell, that the micro manipulator deforms the first molding shell and the reference shell as a function of control signals from a control unit, and that a wave front sensor is arranged on the side of the reference shell opposite the micro manipulator and is connected to the control unit.

## Revendications

1. Procédé pour mouler des lentilles optiques à partir d'un matériau plastique durcissable, dans lequel deux coquilles de moule (14, 16) avec des surfaces (15, 17) de forme prédéfinie sont disposées à distance l'une de l'autre et sont rendues étanches sur leur périphérie, et le matériau plastique est introduit dans un espace intermédiaire (18) enfermé par les surfaces (15, 17) entre les coquilles de moule (14, 16), **caractérisé en ce que** au moins l'une des surfaces (15, 17) est transformée en fonction de données prédéfinies directement avant l'introduction du matériau plastique à partir d'une forme de départ dans la forme prédéfinie.

2. Procédé selon la revendication 1, **caractérisé en ce que** la surface (15, 17) est transformée de façon mécanique.

3. Procédé selon la revendication 2, **caractérisé en ce que** la surface (15, 17) est formée au moyen d'une pluralité d'éléments de positionnement (32) actionnés mécaniquement.

4. Procédé selon la revendication 1, **caractérisé en ce que** la surface (15, 17) est transformée de façon piézo-électrique.

5. Procédé selon la revendication 1, **caractérisé en ce que** la surface (15, 17) est transformée de façon magnétostrictive.

6. Procédé selon l'une quelconque ou plusieurs des revendications 1 à 5, **caractérisé en ce que** la déformation de la surface (15, 17) est enregistrée et la surface (15, 17) est transformée dans un circuit de régulation fermé.

7. Procédé selon la revendication 6, **caractérisé en ce que** la déformation de la surface (15, 17) de la coquille de moule (14, 16) est enregistrée indirectement par le fait qu'une surface de référence (40) est déformée en même temps que la surface (15, 17) et sa déformation est enregistrée.

8. Procédé selon la revendication 7, **caractérisé en ce que** la surface (15, 17) et la surface de référence (40) sont déformées de la même façon.

9. Procédé selon l'une quelconque ou plusieurs des revendications 6 à 8, **caractérisé en ce que** la déformation est enregistrée au moyen d'un capteur de front d'onde (46).

10. Procédé selon l'une quelconque ou plusieurs des revendications 1 à 9, **caractérisé en ce que** les surfaces (15, 17) des deux coquilles de moule (14, 16) sont déformées.

11. Dispositif pour couler des lentilles optiques à partir d'un matériau plastique durcissable, avec deux coquilles de moule (14, 16) disposées à distance l'une de l'autre, dont les surfaces (15, 17) présentent une forme prédéfinie, avec une étanchéité (12) à la périphérie des coquilles de moule (14, 16), et avec des moyens (20, 22) pour l'introduction du matériau plastique dans l'espace intermédiaire (18) enfermé par les surfaces (15, 17) entre les coquilles de moule (14, 16), **caractérisé en ce que** des moyens sont prévus pour transformer au moins l'une des surfaces (15, 17) à partir d'une forme de départ dans la forme prédéfinie en fonction de données prédéfinies, juste avant l'introduction du matériau plastique.

12. Dispositif selon la revendication 11, **caractérisé en ce que** les moyens sont conçus de façon mécanique.

13. Dispositif selon la revendication 12, **caractérisé en ce que** les moyens comprennent une pluralité d'éléments de positionnement (32) actionnés mécaniquement.

14. Dispositif selon la revendication 13, **caractérisé en ce que** les éléments de positionnement (32) font partie d'un micromanipulateur (30, 70).

15. Dispositif selon la revendication 13 ou 14, **caractérisé en ce que** les éléments de positionnement s'étendent sensiblement parallèlement à l'axe (11) optique de la lentille.

16. Dispositif selon la revendication 11, **caractérisé en ce que** les moyens sont conçus piézo-électriques.

17. Dispositif selon la revendication 11, **caractérisé en ce que** les moyens sont conçus magnétostrictifs.

18. Dispositif selon l'une quelconque ou plusieurs des revendications 11 à 17, **caractérisé en ce que** des moyens pour l'enregistrement de la déformation de la surface (15, 17) et un circuit de régulation fermé sont prévus pour former la surface (15, 17).

19. Dispositif selon la revendication 18, **caractérisé en ce qu'**une surface de référence (40) est prévue, **en ce que** les moyens pour déformer la surface (15, 17) de la coquille de moule (14, 16) entraînant en même temps une déformation de la surface de référence (40) et **en ce que** les moyens pour l'enregistrement de la déformation coopèrent avec la surface de référence (40).

20. Dispositif selon la revendication 18 ou 19, **caractérisé en ce que** les moyens pour l'enregistrement de la déformation sont conçus comme un capteur de front d'onde (46).

21. Dispositif selon l'une quelconque ou plusieurs des revendications 11 à 20, **caractérisé en ce que** les coquilles de moule (14, 16) sont conçues à base de verre mince.

22. Dispositif selon l'une quelconque ou plusieurs des revendications 11 à 20, **caractérisé en ce que** les coquilles de moule (14, 16) sont conçues à base de métal mince.

23. Dispositif selon l'une quelconque ou plusieurs des revendications 19 à 22, **caractérisé en ce que** la surface de référence (40) est disposée sur une coquille de référence (42, 72) et la coquille de référence est conçue à base de verre mince.

24. Dispositif selon l'une quelconque ou plusieurs des revendications 19 à 22, **caractérisé en ce que** la surface de référence (40) est disposée sur une coquille de référence (42, 72) et la coquille de référence est conçue à base de métal mince.

25. Dispositif selon l'une quelconque ou plusieurs des revendications 11 à 24, **caractérisé en ce que** sur chacun des deux côtés des coquilles de moule (14, 16) est disposé, en direction de l'axe (11) optique de la lentille, un micromanipulateur (30, 70) pour la déformation des coquilles de moule (14, 16), **en ce que** des coquilles de référence (42, 72) sont disposées à chaque fois sur le côté, opposé aux coquilles de moule (14, 16), des micromanipulateurs (30, 70), **en ce que** les micromanipulateurs (30, 70) déforment à chaque fois la coquille de moule (14, 16) et la coquille de référence (42, 47) qui leur sont attribuées en fonction de signaux de commande d'un dispositif de commande (52) et **en ce que** sur les côtés, opposés aux micromanipulateurs (30, 70), des coquilles de référence (42, 47) sont disposés des capteurs de front d'onde (46) qui sont en liaison avec le dispositif de commande (52).

26. Dispositif selon l'une quelconque ou plusieurs des revendications 11 à 24, **caractérisé en ce qu'**une première coquille de moule déformable et une seconde coquille de moule rigide sont prévues, **en ce qu'**un micromanipulateur pour la déformation de la première coquille de moule est disposé sur un côté de la première coquille de moule en direction de l'axe optique de la lentille, **en ce qu'**une coquille de référence est disposée sur le côté, opposé à la première coquille de moule, du micromanipulateur, **en ce que** le micromanipulateur déforme la première coquille de moule et la coquille de référence en fonction de signaux de commande d'un dispositif de commande, et **en ce qu'**un capteur de front d'onde, qui est en liaison avec le dispositif de commande, est disposé sur le côté, opposé au micromanipulateur, de la coquille de référence.
